# EUROPEAN PATENT APPLICATION

(11) **EP 4 811 903 A1**
(43) Date of publication of application: **23.09.2026**
(21) Application number: 24896263.1
(22) Date of filing: 12.11.2024
(51) Int. Cl.: H04W 72/1268

(54) **COMMUNICATION METHOD AND APPARATUS**

(30) Priority: 30.11.2023 CN 202311641394
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN)
(74) Representative: Körber, Martin Hans
(86) International application number: PCT/CN2024/131578
(87) International publication number: WO 2025/113172

(57) **Abstract**

This application provides a communication method and apparatus, to improve communication efficiency of a terminal device. The method includes: The terminal device receives first signaling, and sends first uplink data in response to the first signaling. The terminal device receives second signaling, and sends second uplink data in response to the second signaling. A time interval between the second signaling and the first signaling is less than processing time for the first uplink data. The first signaling carries a first process number, and the second signaling carries a second process number. Both the first signaling and the second signaling are for paging a terminal device. Alternatively, both the first signaling and the second signaling indicate a time/slot resource used for random access. In the foregoing manner, a delay between two inventory events can be reduced, thereby increasing an inventory rate.

## Description

### CROSS-REFERENCE TO RELATED APPLICATIONS

This application claims priority to Chinese Patent Application No. 202311641394.4, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Internet of things (internet of things, IoT) technologies, such as ambient internet of things (ambient IoT, A-IoT), are introduced in wireless communication systems. A-IoT is based on cellular network communication infrastructure and includes a reader and a passive/semi-passive/active tag. In this scenario, the tag is a terminal in a cellular network, for example, an internet of things terminal with extremely low power consumption and extremely low complexity. The reader may be a base station. Because it is time-consuming for the base station to process uplink signals, an inventory rate is low, and communication quality is poor. This is especially evident in single-tag scenarios in A-IoT, for example, target tracking scenarios in A-IoT, where repeated inventory for a single tag is needed. In this scenario, a high inventory rate is required. A low inventory rate will result in a large inventory latency. Therefore, there is an urgent need for a method for increasing an inventory rate.

### SUMMARY

This application provides a communication method and apparatus, to improve communication efficiency of a terminal device.

According to a first aspect, a communication method is provided. An execution entity of the method may be a terminal device or a chip, a chip system, or a circuit in the terminal device. The method may be implemented through the following steps: receiving first signaling; sending first uplink data in response to the first signaling; receiving second signaling; and sending second uplink data in response to the second signaling. A time interval between the second signaling and the first signaling is less than processing time for the first uplink data. The first signaling carries a first process number, and the second signaling carries a second process number. Both the first signaling and the second signaling are for paging a terminal device. Alternatively, both the first signaling and the second signaling indicate a time/slot resource used for random access.

In comparison with triggering a next inventory event after an inventory event ends, in this application, a next inventory event is triggered in a time period in which the network device processes the first uplink data, so that a delay between the two inventory events can be reduced, thereby increasing an inventory rate. For example, it is assumed that duration of an inventory event is T. In a manner of triggering a next inventory event after the inventory event ends, duration of at least 2T is needed to complete the two inventory events. However, in this application, if a next inventory event is triggered before an inventory event ends, and there is an overlapping time period t between the two inventory events, duration of 2T-t is needed to complete the two inventory events. In this case, the delay can be reduced by duration of at least t.

In a possible design, the first signaling further indicates to skip random access. According to the foregoing design, a first terminal device skips a random access procedure, so that an inventory latency can be further reduced, thereby further increasing the inventory rate.

In a possible design, that the first signaling further indicates to skip the random access includes: The first signaling indicates not to send a random number used for random access, or the first signaling indicates not to monitor third signaling, where the third signaling indicates a time/slot resource used for random access.

In a possible design, if the first signaling indicates the time/slot resource used for random access, that the first signaling indicates to skip the random access includes: The first signaling carries a parameter Q, where a value of the parameter Q is 0, and the parameter Q indicates a quantity of random access slots included in one slot. In the foregoing design, the parameter Q implicitly indicates to skip the random access, so that signaling overheads can be reduced, and implementation complexity can be reduced.

In a possible design, the method further includes: starting a timer, where the timer indicates a time period in which no response is made to the third signaling carrying the first process number, and the third signaling is for paging a terminal device, or the third signaling indicates the time/slot resource used for random access. In the foregoing design, the timer is used to help management of an inventory event.

In a possible design, the first signaling further indicates duration of the timer.

In a possible design, the method further includes: receiving fourth signaling, where the fourth signaling indicates to reset or discard the first process number; and resetting or discarding the first process number. In the foregoing manner, the inventory event corresponding to the first process number can be promptly ended, so that an inventory latency can be further reduced, thereby increasing the inventory rate.

In a possible design, the first signaling further indicates a cyclic redundancy check (cyclic redundancy check, CRC) rule, and the CRC rule is that if a quantity of bits of the first uplink data is less than a threshold, cyclic redundancy check is not performed on the first uplink data.

In a possible design, the first signaling further indicates a CRC rule, and the CRC rule is that if a quantity of bits of the first uplink data is less than (or equal to) a threshold, CRC of a first bit quantity is performed on the first uplink data; or if the quantity of bits of the first uplink data is greater than (or equal to) the threshold, CRC of a second bit quantity is performed on the first uplink data. The first bit quantity is less than the second bit quantity.

In the foregoing solution, a quantity of CRC bits is reduced or CRC check is not performed, so that duration needed for processing uplink data by an access network device can be reduced, thereby further increasing the inventory rate.

In a possible design, the first signaling further indicates processing duration for the first uplink data.

According to a second aspect, a communication method is provided. An execution entity of the method may be a network device or a chip, a chip system, or a circuit in the network device. The method may be implemented through the following steps: sending first signaling to a first terminal device, and receiving first uplink data from the first terminal device; and sending second signaling to the first terminal device, and receiving second uplink data. A time interval between the second signaling and the first signaling is less than processing time for the first uplink data. The first signaling carries a first process number, and the second signaling carries a second process number. Both the first signaling and the second signaling are for paging a terminal device. Alternatively, both the first signaling and the second signaling indicate a time/slot resource used for random access.

In comparison with triggering a next inventory event after an inventory event ends, in this application, a next inventory event is triggered in a time period in which the network device processes the first uplink data, so that a delay between the two inventory events can be reduced, thereby increasing an inventory rate. For example, it is assumed that duration of an inventory event is T. In a manner of triggering a next inventory event after the inventory event ends, duration of at least 2T is needed to complete the two inventory events. However, in this application, if a next inventory event is triggered before an inventory event ends, and there is an overlapping time period t between the two inventory events, duration of 2T-t is needed to complete the two inventory events. In this case, the delay can be reduced by duration of at least t.

In a possible design, the first signaling further indicates to skip random access. According to the foregoing design, the first terminal device skips a random access procedure, so that an inventory latency can be further reduced, thereby further increasing the inventory rate.

In a possible design, that the first signaling further indicates to skip the random access includes: The first signaling indicates not to send a random number used for random access, or the first signaling indicates not to monitor third signaling, where the third signaling indicates a time/slot resource used for random access.

In a possible design, if the first signaling indicates the time/slot resource used for random access, that the first signaling indicates to skip the random access includes: The first signaling carries a parameter Q, where a value of the parameter Q is 0, and the parameter Q indicates a quantity of random access slots included in one slot. In the foregoing design, the parameter Q implicitly indicates to skip the random access, so that signaling overheads can be reduced, and implementation complexity can be reduced.

In a possible design, the first signaling further indicates duration of a timer, the timer indicates a time period in which a terminal device does not respond to the third signaling carrying the first process number, and the third signaling is for paging a terminal device, or the third signaling indicates the time/slot resource used for random access. In the foregoing design, the timer is used to help management of an inventory event.

In a possible design, the method further includes: sending fourth signaling, where the fourth signaling indicates to reset or discard the first process number. In the foregoing manner, the inventory event corresponding to the first process number can be promptly ended, so that an inventory latency can be further reduced, thereby increasing the inventory rate.

In a possible design, the first signaling further indicates a CRC rule, and the CRC rule is that if a quantity of bits of the first uplink data is less than a threshold, cyclic redundancy check is not performed on the first uplink data.

In a possible design, the first signaling further indicates a CRC rule, and the CRC rule is that if a quantity of bits of the first uplink data is less than (or equal to) a threshold, CRC of a first bit quantity is performed on the first uplink data; or if the quantity of bits of the first uplink data is greater than (or equal to) the threshold, CRC of a second bit quantity is performed on the first uplink data. The first bit quantity is less than the second bit quantity.

In the foregoing solution, a quantity of CRC bits is reduced or CRC check is not performed, so that duration needed for processing uplink data by an access network device can be reduced, thereby further increasing the inventory rate.

In a possible design, the first signaling further indicates processing duration for the first uplink data.

According to a third aspect, this application further provides a communication apparatus. The apparatus is a terminal device or a chip in the terminal device. The communication apparatus has a function of implementing any method provided in the first aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the terminal device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a service network device, for example, data or signal receiving and sending. For example, a communication interface may be a transceiver, a circuit, a bus, a module, or another type of communication interface.

In a possible design, the communication apparatus includes corresponding functional modules respectively configured to implement steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect. Details are not described herein.

According to a fourth aspect, this application further provides a communication apparatus. The apparatus is a network device or a chip in the network device. The communication apparatus has a function of implementing any method provided in the second aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device, for example, data or signal receiving and sending. For example, a communication interface may be a transceiver, a circuit, a bus, a module, or another type of communication interface.

In a possible design, the communication apparatus includes corresponding functional modules respectively configured to implement steps in the foregoing methods. The function may be implemented by hardware, or may be implemented by executing corresponding software by hardware. The hardware or the software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the second aspect. Details are not described herein.

According to a fifth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the first aspect and the possible designs by a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method in any one of the second aspect and the possible designs by a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs is implemented.

According to an eighth aspect, a computer program product storing instructions is provided. When the instructions are run by a processor, the method in any one of the first aspect or the second aspect and the possible designs is implemented.

According to a ninth aspect, a chip system is provided. The chip system includes a processor, and may further include a memory. The chip system is configured to implement the method in any one of the first aspect or the second aspect and the possible designs. The chip system may include a chip, or may include a chip and another discrete component.

According to a tenth aspect, a communication system is provided. The system includes a first terminal device and a network device. The network device sends first signaling to the first terminal device. The first terminal device sends first uplink data to the network device. The network device sends second signaling to the first terminal device, where a time interval between the second signaling and the first signaling is less than processing time for the first uplink data. The first terminal device sends second uplink data to the network device, where the first signaling carries a first process number, the second signaling carries a second process number, and both the first signaling and the second signaling are for paging a terminal device, or both the first signaling and the second signaling indicate a time/slot resource used for random access.

For technical effects that can be achieved by the technical solutions in any one of the third aspect to the tenth aspect, refer to the descriptions of the technical effects that can be achieved by the technical solutions in the first aspect. Details are not described herein.

### BRIEF DESCRIPTION OF DRAWINGS

FIG. 1 is a diagram of a communication system to which an embodiment of this application is applicable;
FIG. 2 is a diagram of a communication system in which a reader is separated in FIG. 1;
FIG. 3 is a flowchart of an inventory process according to an embodiment of this application;
FIG. 4 is a schematic flowchart of a communication method according to an embodiment of this application;
FIG. 5 is a flowchart of an inventory process according to an embodiment of this application;
FIG. 6 is a flowchart of an inventory process according to an embodiment of this application;
FIG. 7 is a diagram of a structure of a communication apparatus according to an embodiment of this application; and
FIG. 8 is a diagram of another structure of a communication apparatus according to an embodiment of this application.

### DESCRIPTION OF EMBODIMENTS

Technical solutions provided in embodiments of this application may be applied to an internet of things (internet of things, IoT) system. The IoT includes an ambient internet of things (ambient IoT, A-IoT), a narrow band internet of things (narrow band internet of things, NB-IoT), and the like. An IoT technology is widely applied to various industry fields. For example, the IoT technology may be applied to scenarios such as logistics, warehousing, industrial manufacturing, identity identification, or environment monitoring. The IoT is implemented based on a radio frequency identification (radio frequency identification, RFID) technology. The RFID technology is a non-contact communication technology implemented in a radio frequency communication manner. A principle of the RFID technology is that a reader (reader) and a tag (tag) do not need to contact each other, and data communication is implemented by using radio waves. The IoT technology may be applied to a communication system related to a 3rd generation partnership project (3rd generation partnership project, 3GPP), for example, a long term evolution (long term evolution, LTE) communication system or a 5th generation (5th generation, 5G) mobile communication system, or may be applied to another next-generation mobile communication system, for example, a sixth generation (6G) communication system, or another similar communication system. The another similar communication system may include a wireless fidelity (wireless fidelity, Wi-Fi) system, an internet of vehicles (vehicle-to-everything, V2X) system, and the like.

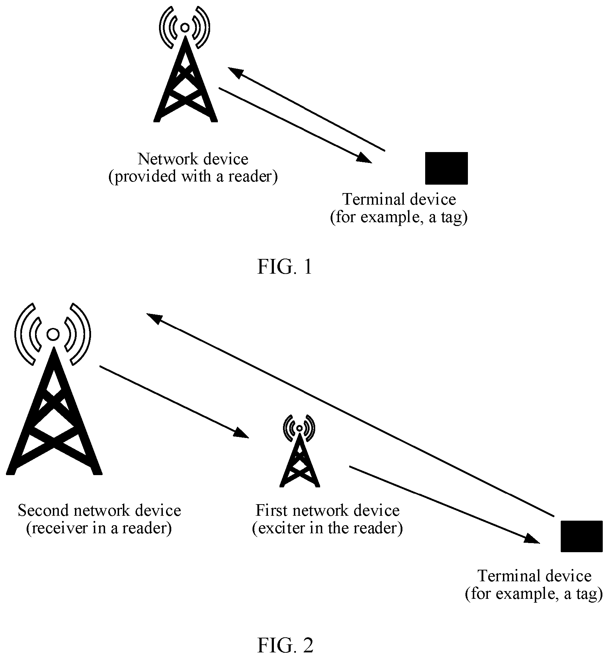

FIG. 1 is a diagram of a communication system according to an embodiment of this application. In FIG. 1, an example in which the communication system includes one terminal device and one network device is used. A network architecture shown in FIG. 1 is merely an example, and there may be fewer or more terminal devices and network devices. The communication system described in this embodiment of this application is intended to describe the technical solutions in embodiments of this application more clearly, but constitutes no limitation on the communication system to which embodiments of this application are applicable. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

A device that can perform data communication with the network device may be considered as a terminal device. The terminal device is also referred to as a terminal, a terminal apparatus, a user equipment (user equipment, UE), a mobile station, a mobile terminal, or the like. For example, the terminal device may be a mobile phone, a computer, a mobile internet device (mobile internet device, MID), a wearable device, a virtual reality (virtual reality, VR) device, an augmented reality (augmented reality, AR) device, a robot arm, a camera, a robot, a smart home device (for example, a television, an air conditioner, a robot vacuum cleaner, a sound box, or a set-top box), a relay (relay), customer premises equipment (customer premises equipment, CPE), or a device having a tag function. For example, the terminal device may be a tag or the like in IoT/A-IoT. In FIG. 1, an example in which the terminal device is an A-IoT terminal is used.

The tag may be referred to as an RFID tag or an electronic tag, or may be referred to as an A-IoT terminal or an A-IoT device, and is usually attached to an object to identify a target object. The tag may receive a radio frequency signal from a reader. With energy obtained from an induced current, the tag may send information stored in a chip in the tag, or the tag may actively send a signal at a specific frequency to the reader. The reader reads the information from the tag. A design of the tag is simple. Application layer signaling and air interface signaling are designed in an integrated manner, featuring low power consumption. The tag includes three types: an active tag, a passive tag, and a semi-active/semi-passive tag. The active tag is also referred to as an active tag (active tag). The passive tag is also referred to as a passive tag (passive tag). The semi-active/semi-passive tag is also referred to as a semi-passive tag (semi-passive tag). The active tag/active tag is equipped with a power supply, and uses a communication manner of actively generating a carrier, that is, may actively send a signal to the reader, without a need to obtain, based on a received signal, energy for sending the signal. The passive tag/passive tag is not equipped with a module such as a power supply, or the power supply module has a small amount of electricity. The passive tag may use a backscatter (backscatter)-based communication manner, so that energy can be obtained from an environment, and a signal can be sent by using the energy. The passive tag may work in a backscatter communication scenario. For example, the passive tag obtains energy by backscattering a signal from the reader to transmit data. The semi-active/semi-passive tag integrates advantages of the active tag and the passive tag, and may be used as a special type of marker. Usually, the semi-active/semi-passive tag is in a sleep state, may not work, and does not send a signal to the outside. The semi-active/semi-passive tag is activated and starts to work only when entering an activation signal range of a low-frequency activator. The tag in embodiments of this application may be an active tag, a passive tag, a semi-active/semi-passive tag, or the like.

In embodiments of this application, the tag may be used as a terminal device. Correspondingly, the terminal device in this application may be of the following three types: a passive terminal, which has no energy storage, cannot independently generate a signal, and transmits a signal through backscattering; a semi-passive terminal, which has energy storage, but cannot independently generate a signal, and transmits a signal through backscattering, where energy stored by the semi-passive terminal can amplify a backscattered signal; and an active terminal, which has energy storage, can independently generate a signal, and has an active radio frequency element for transmission.

Both a tag device and the reader may be implemented based on infrastructure in a cellular network, or the tag device and the reader may be devices in the cellular network. For example, a function of the reader may be implemented by a network device or a terminal device, and the tag device may be implemented by a terminal device in the cellular network. For example, the tag device may be an internet of things terminal with extremely low power consumption and extremely low complexity. When the terminal device has a function of the tag device, non-contact data communication may be performed between the terminal device and the network device or another terminal device.

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or a vehicle-mounted unit that is built in the vehicle as one or more components or units. The vehicle-mounted terminal device may alternatively be an entire vehicle device, a vehicle-mounted module, a vehicle, an on-board unit (on-board unit, OBU), a roadside unit (roadside unit, RSU), an in-vehicle infotainment system (also referred to as an in-vehicle sending unit) (telematics box, T-box), a chip, a system-on-a-chip (system-on-a-chip, SoC), or the like. The chip or the SoC may be mounted in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be mounted in the terminal device. A specific technology used by the terminal device and a specific device form of the terminal device are not limited in embodiments of this application. For example, in embodiments of this application, the terminal device may be in a tag form, or may be in another terminal form. Unless otherwise specified, the terminal device and the tag can be replaced with each other.

The network device may also be referred to as a radio access network (radio access network, RAN) device. The RAN may be a 3GPP-related cellular system, for example, an LTE system, a new radio (new radio, NR) system, or a future-oriented evolved system (for example, a 6G mobile communication system). Alternatively, the RAN may be an open access network (open RAN, O-RAN or ORAN), a cloud radio access network (cloud radio access network, CRAN), a virtualized radio access network (virtualized RAN, vRAN), or the like. The RAN may alternatively be a communication system that integrates two or more of the foregoing systems. The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be a RAN node in a V2X technology, an access node in an RSU and a Wi-Fi system, or the like.

Alternatively, the RAN node may be a module or unit that completes some functions of a base station. Alternatively, a plurality of RAN nodes cooperate to assist the terminal device in implementing wireless access. Different RAN nodes each implement some functions of the base station. For example, the RAN node may be a central unit (central unit, CU), a distributed unit (distributed unit, DU), or a radio unit (radio unit, RU). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. The CU and the DU may be configured based on protocol layer functions of a wireless network that are implemented by the CU and the DU. Protocol layers separately configured for the CU and the DU are not limited in embodiments of this application. Any one of the CU, the DU, and the RU in this application may be implemented by a software module, a hardware module, or a combination of a software module and a hardware module.

In embodiments of this application, the reader may be built in the network device. When the terminal device is a tag, the tag may communicate with the network device through a Uu interface, as shown in FIG. 1. Functions of the reader may be further separated. The reader is divided into a receiver (receiver) and an exciter (helper). The receiver is also referred to as a receive end or a receiving unit, and the exciter is also referred to as an excitation end or an excitation unit. The excitation unit is equivalent to a transmitter in the reader, and the receiving unit is equivalent to the receiver in the reader. When the reader is implemented in a separated architecture, different entities of the reader may be deployed on different network devices, as shown in FIG. 2. In FIG. 2, an exciter is deployed on a first network device, and is configured to perform a sending function of a reader; and a receiver is deployed on a second network device, and is configured to perform a receiving function of the reader. Transmission may be performed between the exciter and the reader/network device through an air interface, or may be performed in a wired connection manner.

In embodiments of this application, an apparatus configured to implement a function of the network device may be the network device, or may be an apparatus that can support the network device in implementing the function, for example, a chip system or a combined device or component that can implement the function of the network device. The apparatus may be mounted in the network device. A specific technology used by the network device and a specific device form of the network device are not limited in embodiments of this application.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first process number and a second process number are merely used to distinguish between different process numbers, but do not indicate different sizes, priorities, or importance degrees of the two process numbers.

It should be noted that in this application, the terms such as "example" or "for example" are used to represent giving an example, an illustration, or a description. Any embodiment or design solution described as an "example" or "for example" in this application should not be explained as being more preferred or having more advantages than another embodiment or design solution. To be precise, use of the terms such as "example" or "for example" is intended to present a relative concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

Tags may be used in a plurality of industries and fields. Logistics management is a typical application, and is implemented by inventorying physical tags. For tag inventory, the tags need to access a network. After each tag accesses the network randomly, an identifier of the tag may be reported to a reader, so that the reader can determine presence of the tag within a coverage area. After accessing the network, the tag may exchange some service information with a network device (for example, a reader) and/or a core network element. For example, the core network element may forward a message to the tag through the network device, where the message may include information about an operation that needs to be performed on the tag. Alternatively, the network device may forward a message from the tag to the core network element, and the network device may parse or process the message from the core network element or the tag. Common tag services include inventory, reading (Reading), writing (Writing), positioning (Positioning), killing (Killing), and tag information obtaining. The inventory may also be referred to as stocktaking, and is to obtain identifiers of all tags within a coverage area of the network device. The reading may be reading data from a tag. The writing may be writing data to a tag. The positioning may be obtaining position information of a tag. The killing may also be referred to as invalidation, which may make a tag identifier invalid or killed. The tag information obtaining may be obtaining information of a tag, for example, an identifier of the tag, information stored in the tag, and position information of the tag. The foregoing tag services are merely examples, and a quantity and type of the tag service are not limited in embodiments of this application. For example, the tag service further includes an authentication service.

The following describes technical background related to embodiments of this application.

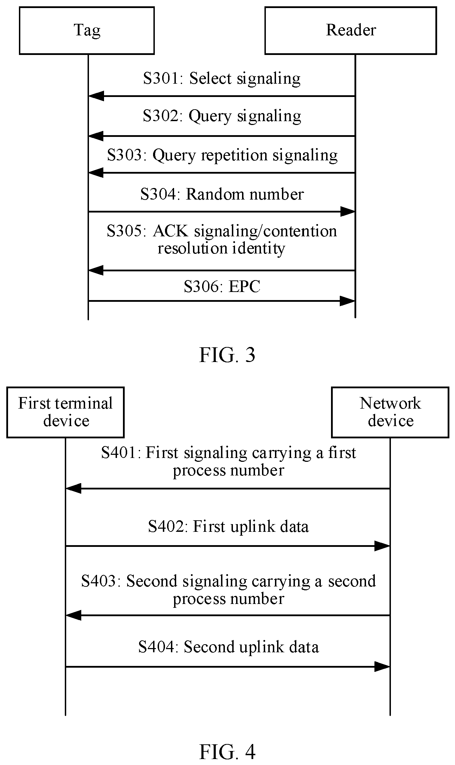

In A-IoT, a network device may perform inventory on a terminal device. A specific inventory process is similar to an inventory process in RFID. FIG. 3 shows the inventory process in the RFID.

S301: A reader sends select (Select) signaling.

The select signaling includes an identifier range of a to-be-selected tag. The identifier range of the tag includes an identifier of the tag.

Optionally, the select signaling may alternatively be replaced with downlink trigger signaling, paging signaling, or a system message. For example, the message/signaling is for selecting/paging at least one tag, or triggering the at least one tag to wake up, or enter an inventory process, or start to monitor other downlink signaling related to random access.

Optionally, the select signaling may carry a mask, a group identifier, or identifier information. If the tag matches the mask, the group identifier, or the identifier information, the tag responds to the select signaling. If the tag does not match the mask, the group identifier, or the identifier information, the tag does not respond to the select signaling.

Optionally, the select signaling may further indicate (for example, by using an action (action) field) the tag to generate a flag bit, where the flag bit is only an example name, and may be alternatively described as a state identifier or the like. The tag determines, based on the flag bit, whether a current round of inventory/data transmission/service is completed. For example, if the flag bit remains unchanged, it indicates that the current round of inventory/data transmission/service is not completed; and if the flag bit flips, it indicates that the current round of inventory/data transmission/service is completed. Optionally, after the current round of inventory/data transmission/service is completed, the tag may not continue to respond to other downlink signaling, and start to monitor next select signaling.

S302: The reader sends a query (Query) signaling.

Optionally, the reader may alternatively not send the select signaling/the paging signaling/the system message, and instead directly send the query signaling to trigger the tag to enter access/inventory in the current round or a subsequent slot.

The query signaling may carry a Q value, and Q may determine a quantity of random access slots. Access collisions between tags can be reduced by setting the Q value. The query signaling may further carry a flag bit and a session (session) identifier. The tag determines, depending on whether the tag matches the flag bit and/or the session identifier, whether to respond to or enter a subsequent inventory/access process. For example, if the tag matches the flag bit and/or the session identifier, the tag generates a random number or a slot number based on Q (for details, refer to related descriptions for S304); or if the tag does not match the flag bit and/or the session identifier, the tag does not respond to the query signaling.

S303: The reader sends a query repetition (QueryRep) signaling.

The reader may send the QueryRep signaling a plurality of times. For example, the reader may repeatedly send 2*^{Q}* pieces of QueryRep signaling.

S303 shows only one piece of QueryRep signaling. Subsequent QueryRep signaling may be sent after S305 or S306.

For example, each QueryRep corresponds to the start or end of an access slot. The tag may randomly select an access slot, and in the corresponding access slot, initiate access or send uplink data or receive downlink data.

S304: The tag sends the random number to the reader.

For example, the random number may alternatively be a temporary identifier of UE. For example, the random number or the temporary identifier may be used for random access contention resolution and/or initiating a random access request.

When the tag determines that the identifier of the tag is in the identifier range indicated by the select signaling, after detecting the query signaling, the tag sends a random number to the reader in response to the query signaling. The tag may generate a random number within a range of [0, 2*^{Q}*-1] based on the Q value. For example, if Q=4, the tag generates a random number within a range of [0, 15]. The tag records the quantity of random numbers as an initial value of a counter (counter). Each time the tag receives the QueryRep signaling, a value of the counter is subtracted by 1. When the value of the counter is 0, the tag sends the random number to initiate access.

S305: The reader sends acknowledgment (ACK) signaling or a contention resolution identity to the tag, where the ACK signaling includes the random number received from the tag.

For example, the random number indicates that the uplink data is successfully received or the random access contention resolution succeeds.

The reader sends the ACK signaling to the tag, and if the random number included in the ACK signaling is consistent with the random number sent by the tag to the reader, the tag accesses the reader.

S306: The tag sends an electronic product code (electronic product code, EPC) of the tag to the reader.

In an implementation, the reader forwards/transparently transmits/sends received data to a core network element (where the core network element may be an access and mobility management function (access and mobility management function, AMF) (entity), a network exposure function (network exposure function, NEF) (entity), a tag management function (tag management function, TMF) (entity), or the like).

By way of example, the tag is not limited to sending the EPC, and may alternatively send other uplink data, such as an extended product code (extended product code, XPC), a tag identifier (tag ID), a user identifier (UE ID), application layer data, and a commodity code, or other data stored in a tag memory bank (memory bank). Such data may be used by the reader to identify the tag or complete a service (for example, inventory, positioning, sensing, tracking, reading, writing, locking, or killing).

In wireless communications, a bit length of signaling needs to meet byte alignment, and the network device requires a long time to process an uplink signal, which may reach hundreds of microseconds or even several milliseconds. This means that after receiving uplink data, the network device needs hundreds of microseconds or even several milliseconds to process the uplink data, and can send a downlink data feedback only after the processing is complete. In this time period, a waste of time-domain resources is caused, and an inventory rate (that is, a quantity of tags read per second) is consequently low. This issue is especially significant in a single-tag scenario in the A-IoT, for example, a target tracking scenario in the A-IoT, where repeated inventory for a single tag is needed. In this scenario, a high inventory rate is required. A low inventory rate will result in a large inventory latency.

In view of this, embodiments of this application provide a communication method and apparatus, to resolve a problem of a low inventory rate in the A-IoT. The method and the apparatus are based on a same inventive concept. Because the method and the apparatus have a similar problem-resolving principle, for implementations of the apparatus and the method, refer to each other, and repeated descriptions are not provided. The method and the apparatus are based on a same inventive concept. Because the method and the apparatus have a similar problem-resolving principle, for implementations of the apparatus and the method, refer to each other, and repeated descriptions are not provided.

For example, the communication method provided in this embodiment of this application may be applied to an A-IoT scenario, and is particularly applicable to a single-tag (or single-user) scenario in A-IoT. The single-tag scenario may be a scenario in which there is only one tag or inventory is performed on only one tag in a communication environment. In the single-tag scenario, inventory may be performed once or a plurality of times on the tag.

The following describes an example in which the communication method provided in embodiments of this application is performed by a network device and a terminal. Steps performed by the network device may be implemented by the network device, or may be implemented by a component (for example, a module such as a baseband chip or another processing unit or processor) in the network device. Steps performed by the terminal device may be implemented by the terminal device, or may be implemented by a component (for example, a module such as a chip, a processing unit, or a processor) in the terminal device.

Names of messages/signaling in this application are merely examples. A specific name of each message/signaling is not limited in this application. Any name that meets a function/limitation/meaning/description or the like of a message may be understood as referring to that message. For example, paging signaling and the select signaling are merely example names of a paging message, and may be both understood as the paging message in this application provided that the paging signaling and the select signaling meet a function/limitation/meaning/description of the paging message in this application.

The following describes the technical solutions in embodiments of this application with reference to the accompanying drawings in embodiments of this application.

FIG. 4 is a schematic flowchart of a communication method according to an embodiment of this application. The method is for a network device to obtain an operating mode of a terminal.

S401: The network device sends first signaling to a first terminal device. Correspondingly, the first terminal device receives the first signaling from the network device.

The first signaling may be for paging a terminal device, or selecting a terminal device, or triggering a terminal device to start to monitor downlink signaling, or triggering a terminal device to send uplink data. For example, the first signaling may be a paging message. For example, the paging message may be paging signaling, select signaling, or the like. Alternatively, the first signaling may indicate a time/slot resource used for random access. For example, the first signaling may be query signaling.

In an example, the first signaling may carry a first process number.

It should be noted that a process number is merely an example name, and identifies an inventory event. The process number may alternatively be described as an identifier, an event identifier, an event number, or the like.

In another example, the first signaling may carry a multi-process/parallel indication identifier.

After receiving the first signaling carrying the multi-process/parallel indication identifier, the first terminal device may continue to respond to other signaling carrying a multi-process/parallel indication identifier, for example, second signaling below.

S402: The first terminal device sends first uplink data to the network device. Correspondingly, the network device receives the first uplink data.

The first uplink data may be sent by the first terminal device in response to the first signaling. Alternatively, it may be understood that the first uplink data is associated with the first signaling; or the first uplink data is associated with an inventory event corresponding to the first process number; or the first uplink data is associated with the first process number; and so on.

Optionally, the first uplink data carries the first process number or the multi-process/parallel indication identifier, to indicate that the uplink data corresponds to the first signaling.

It should be noted that, in this application, the "inventory event" may alternatively be described as an "inventory service", an "inventory process", an "inventory operation", a "stocktaking event", a "stocktaking service", a "stocktaking process", a "stocktaking operation", or the like.

In a possible implementation, after sending the first uplink data, the first terminal device may start a timer.

Before the timer expires, the first terminal device does not respond to downlink signaling carrying a process number that is being maintained (or stored) by the first terminal device, for example, a paging message/query signaling/QueryRep signaling. The process number that is being maintained (or stored) by the first terminal device includes the first process number. Alternatively, before the timer expires, the first terminal device may respond to other downlink signaling carrying a multi-process/parallel indication identifier, for example, a paging message/query signaling/QueryRep signaling.

Optionally, duration of the timer may be indicated by the network device, for example, by using the first signaling, or may be predefined in a protocol, and so on.

In an example description, the duration of the timer may be processing time for the first uplink data. The processing time for the first uplink data may be understood as time for the network device to process the first uplink data, or may be understood as time for the network device to respond to the first uplink data, or may be understood as a time interval between the first uplink data and feedback information corresponding to the first uplink data.

In an optional solution, the first terminal device may further reset the first process number before the timer expires. For example, the first terminal device may reset the first process number under triggering of fourth signaling from the network device.

In a possible implementation, the network device may send the fourth signaling after processing the first uplink data.

For example, the fourth signaling may be a paging message/query signaling/QueryRep signaling or the like.

It should be noted that resetting the first process number may alternatively be described as discarding the first process number, stopping maintaining the first process number, no longer saving the first process number, allowing response to the first process number, releasing the first process number, or the like.

In the foregoing manner, the inventory event corresponding to the first process number can be promptly ended, so that an inventory latency can be further reduced, thereby increasing an inventory rate.

In a possible manner of process number indication, first m process numbers are indicated by n high-order bits of a field, and an (m+1)^{th} process number and a subsequent process number are indicated by N bits, where both N and n are integers, n is less than N, and m is an integer greater than 0.

For example, assuming that n=2 and N=3, first two process numbers may be indicated by two bits. For example, 00 indicates a process #1, and 01 indicates a process #2. A third process number and a subsequent process number may be indicated by three bits. For example, 100 indicates a process #3, and 101 indicates a process #4.

Assuming that n=2 and N=4, first two process numbers may be indicated by two bits. For example, 00 indicates a process #1, and 01 indicates a process #2. A third process number and a subsequent process number may be indicated by four bits. For example, 1000 indicates a process #3, 1001 indicates a process #4, 1010 indicates a process #5, 1011 indicates a process #6, 1100 indicates a process #7, 1101 indicates a process #8, ..., and the rest may be deduced by analogy.

It should be understood that, in the foregoing descriptions, the process numbers starting from 1 are merely used as examples.

In the foregoing manner, the process numbers are indicated by variable-length fields, so that when a quantity of processes is small, the network device can use fewer bits to indicate process numbers, and signaling overheads can be reduced. In addition, a signaling length is shortened, so that duration for the terminal device to read signaling is reduced. In this way, the inventory rate can be further increased.

S403: The network device sends the second signaling to the first terminal device. Correspondingly, the first terminal device receives the second signaling from the network device.

In an example, the second signaling carries a second process number. An indication manner is similar to a manner in which the first signaling indicates the first process number. For details, refer to the foregoing descriptions.

In another example, the second signaling may carry a multi-process/parallel indication identifier.

Optionally, after sending second uplink data, the first terminal device may alternatively start a timer corresponding to the second uplink data.

Before the timer expires, the first terminal device does not respond to downlink signaling carrying a process number that is being maintained (or stored) by the first terminal device, for example, a paging message/query signaling/QueryRep signaling. The process number that is being maintained (or stored) by the first terminal device includes the second process number. Alternatively, before the timer expires, the first terminal device may respond to other downlink signaling carrying a multi-process/parallel indication identifier, for example, a paging message/query signaling/QueryRep signaling. A specific manner is similar to the manner in which the first terminal device starts the timer after sending the first uplink data. Details are not described herein again.

Further, the first terminal device may further reset the second process number before the timer corresponding to the second uplink data expires. For example, the first terminal device may reset the second process number under triggering of fifth signaling from the network device. A specific manner is similar to the manner in which the first terminal device resets the first process number. Details are not described herein again.

The second signaling may be for paging a terminal device, or selecting a terminal device, or triggering a terminal device to start to monitor downlink signaling, or triggering a terminal device to send uplink data. For example, the second signaling may be a paging message. Alternatively, the second signaling may indicate a time/slot resource used for random access. For example, the second signaling may be query signaling.

The second signaling is sent by the network device before the inventory event corresponding to the first process number ends. Alternatively, it may also be understood that the inventory event corresponding to the first process number and an inventory event corresponding to the second process number overlap in time domain (or have an overlapping time period). Alternatively, it may be understood that the network device sends the second signaling to the first terminal device before sending the feedback information of the first uplink data to the first terminal device. Alternatively, it may be understood that a time interval between the second signaling and the first signaling is less than the processing time for the first uplink data.

S404: The first terminal device sends the second uplink data to the network device. Correspondingly, the network device receives the second uplink data from the first terminal device.

The second uplink data may be sent by the first terminal device in response to the second signaling. Alternatively, it may be understood that the second uplink data is associated with the second signaling; or the second uplink data is associated with the inventory event corresponding to the second process number; or the second uplink data is associated with the second process number; and so on.

Optionally, the second uplink data carries the second process number or the multi-process/parallel indication identifier, to indicate that the uplink data corresponds to the second signaling.

In comparison with triggering a next inventory event after an inventory event ends, in this application, a next inventory event is triggered in a time period in which the network device processes the first uplink data, so that a delay between the two inventory events can be reduced, thereby increasing the inventory rate. For example, it is assumed that duration of an inventory event is T. In a manner of triggering a next inventory event after the inventory event ends, duration of at least 2T is needed to complete the two inventory events. However, in this application, if a next inventory event is triggered before an inventory event ends, and there is an overlapping time period t between the two inventory events, duration of 2T-t is needed to complete the two inventory events. In this case, the delay can be reduced by duration of at least t.

In a possible manner, after receiving the first signaling, the first terminal device may skip a random access procedure, or not perform the random access procedure. For example, after receiving the first signaling, the first terminal device may not monitor the query signaling/the QueryRep signaling, or not respond to the query signaling/the QueryRep signaling, or not send a random number. Alternatively, if the first terminal device performs the random access based on a 4-step random access procedure, after receiving the first signaling, the first terminal device may not send a message 1 (Msg1) and/or a message 3 (Msg3), or not monitor a message 2 (Msg2) and/or a message 4 (Msg4). Alternatively, if the first terminal device performs the random access based on a 2-step random access procedure, after receiving the first signaling, the first terminal device may not send a message A (MsgA), or not monitor a message B (MsgB).

The Msg1 or the MsgA may also be referred to as a random access request message/a random access preamble (preamble) message or the like.

The Msg2 may also be referred to as a random access response (random access response, RAR) message. Optionally, the RAR may include a preamble identifier, a temporary cell-radio network temporary identifier (temporary cell-radio network temporary identifier, TC-RNTI), a timing advance (timing advance, TA), an uplink grant (uplink grant, UL grant), and the like.

The Msg3 may also be referred to as a transmission scheduling message, an RRC connection establishment request (RRC connection request) message, an RRC connection re-establishment request (RRC Reestablishment Request), an RRC connection resume request (RRC Resume Request), an RRC connection establishment request (RRC Setup Request), or the like.

The Msg4 or the MsgB may also be referred to as a contention resolution message (UE Contention Resolution Identity), an RRC connection establishment complete message (RRC connection setup), a random access response message (random access response), or the like.

Optionally, the network device may indicate, by using the first signaling, to skip random access. That the first signaling indicates to skip the random access may alternatively be described as that the first signaling indicates not to send a random number used for random access; or the first signaling indicates not to monitor the query signaling/the QueryRep signaling; or the first signaling indicates single-tag inventory; or the first signaling indicates the first terminal device to directly send uplink data without monitoring other downlink signaling; and so on.

In an example description, "skip the random access" may alternatively be described as not performing the random access, not initiating the random access, or the like. Not responding to XXX may alternatively be described as discarding XXX, not monitoring XXX, not decoding XXX, not sending a response message for XXX, or the like.

In an example, the first signaling may explicitly indicate to skip the random access. For example, the first signaling carries indication information/a field/an identifier/an indication field that indicates to skip the random access.

In another example, the first signaling may implicitly indicate to skip the random access.

For example, the first signaling may implicitly indicate, by carrying a process number, to skip the random access. Alternatively, if the first signaling is query signaling, the first signaling may implicitly indicate, in the following manner, to skip the random access: The first signaling carries a parameter Q, where a value of the parameter Q is 0, the parameter Q indicates a quantity of random access slots included in one slot. For example, Q indicates 2*^{Q}* random access slots, and access of one terminal device is allowed in each random access slot. For details, refer to the related descriptions for S304. Details are not described herein again.

For another example, the first signaling may implicitly indicate, by carrying the multi-process/parallel indication identifier or the first process number, to skip the random access. If the first signaling carries the multiprocess/parallel indication identifier or the first process number, the first signaling indicates to skip the random access.

It may be understood that, after receiving the second signaling, the first terminal device may alternatively skip the random access procedure, and the second signaling may also indicate to skip random access. For details, refer to the related descriptions in which the first terminal device skips the random access procedure after receiving the first signaling and the first signaling indicates to skip the random access. Details are not described herein again.

For ease of understanding of the solution, the following separately describes the solution provided in this application by using an example in which the first signaling is a paging message and the first signaling is query signaling.

Example 1: The first signaling is a paging message.

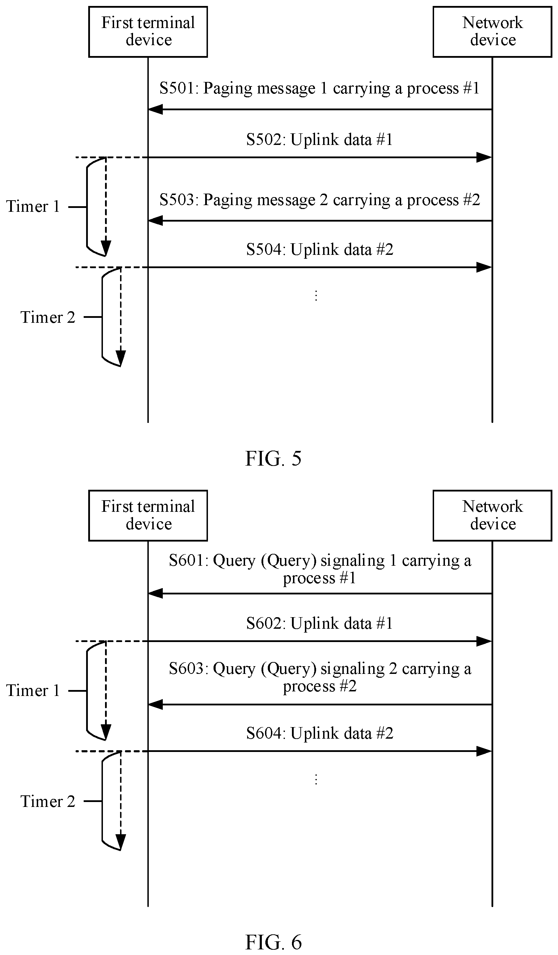

As shown in FIG. 5, an inventory process may include the following steps.

S501: A network device sends a paging message 1 to a first terminal device.

The paging message 1 carries a process #1. Optionally, the paging message 1 further indicates the first terminal device to skip random access.

For details of the paging message 1, refer to the foregoing descriptions about the first signaling.

S502: The first terminal device sends uplink data #1.

Optionally, if the paging message 1 further indicates to skip the random access, after receiving the paging message 1, the first terminal device may skip a random access procedure. For example, the network device does not send query signaling/QueryRep signaling, the first terminal device does not respond to or monitor the query signaling/the QueryRep signaling, and the first terminal device does not send a random number.

Optionally, after sending the uplink data #1, the first terminal device starts a timer 1, and during timing of the timer 1, the first terminal device does not respond to the paging message carrying the process number #1. It may be understood that the first terminal device may respond to a paging message of another process number during the timing of the timer 1. For details of this manner, refer to the foregoing descriptions about the timer. Details are not described herein again.

S503: The network device sends a paging message 2 to the first terminal device.

The paging message 2 carries a process #2. Optionally, the paging message 2 further indicates to skip random access.

For details of the paging message 2, refer to the foregoing descriptions about the second signaling.

S504: The first terminal device sends uplink data #2.

Optionally, if the paging message 2 further indicates to skip the random access, after receiving the paging message 2, the first terminal device may skip a random access procedure. For example, the network device does not send the query signaling/the QueryRep signaling, and the first terminal device does not respond to the query signaling/the QueryRep signaling or not send a random number for a random access request.

Optionally, after sending the uplink data #2, the first terminal device starts a timer 2, and during timing of the timer 2, the first terminal device does not respond to the paging message carrying the process number #2. It may be understood that the first terminal device may respond to a paging message of another process number during the timing of the timer 2. For details of this manner, refer to the foregoing descriptions about the timer. Details are not described herein again.

Similarly, the network device may further trigger another inventory event of the first terminal device subsequently, that is, send select signaling carrying another process number. For details, refer to an inventory event corresponding to the process #2. Details are not described herein again.

Example 2: The first signaling is query signaling.

As shown in FIG. 6, an inventory process may include the following steps.

S601: A network device sends query signaling 1 to a first terminal device.

The query signaling 1 carries a process #1. Optionally, the query signaling 1 further indicates the first terminal device to skip random access, or indicates the first terminal device to directly send uplink data without monitoring other downlink signaling.

For details of the query signaling 1, refer to the foregoing descriptions about the first signaling.

S602: The first terminal device sends uplink data #1.

Optionally, if the query signaling 1 further indicates to skip the random access, after receiving the query signaling 1, the first terminal device may skip a random access procedure. For example, the first terminal device does not send a random number.

Optionally, after sending the uplink data #1, the first terminal device starts a timer 1, and during timing of the timer 1, the first terminal device does not respond to the query signaling carrying the process number #1. It may be understood that the first terminal device may respond to query signaling of another process number during the timing of the timer 1. For details of this manner, refer to the foregoing descriptions about the timer. Details are not described herein again.

S603: The network device sends query signaling 2 to the first terminal device.

The query signaling 2 carries a process #2. Optionally, the query signaling 2 further indicates to skip random access.

For details of the query signaling 2, refer to the foregoing descriptions about the second signaling.

S604: The first terminal device sends uplink data #2.

Optionally, if the query signaling 2 further indicates to skip the random access, after receiving the query signaling 2, the first terminal device may skip a random access procedure. For example, the first terminal device does not send a random number.

Optionally, after sending the uplink data #2, the first terminal device starts a timer 2, and during timing of the timer 2, the first terminal device does not respond to the query signaling carrying the process number #2. It may be understood that the first terminal device may respond to query signaling of another process number during the timing of the timer 2. For details of this manner, refer to the foregoing descriptions about the timer. Details are not described herein again.

Similarly, the network device may further trigger another inventory event of the first terminal device subsequently, that is, send query signaling carrying another process number. For details, refer to an inventory event corresponding to the process #2. Details are not described herein again.

For the signaling in the foregoing two examples, for example, the select signaling/the query signaling/the QueryRep signaling/the random number, refer to the foregoing descriptions about the paging message/the query signaling/the QueryRep signaling/the random number and the like in FIG. 3.

The foregoing describes a process in which the first terminal device performs a plurality of inventory events. The following describes six solutions that can further increase an inventory rate. It should be understood that the following six solutions may be implemented with reference to the method in FIG. 4, or may be implemented independently without depending on the method in FIG. 4. In addition, the following six solutions may be implemented in combination with each other, or may be implemented independently.

### Solution 1:

Currently, a MAC CE carries a logical channel identification (logical channel identification, LCID), and the LCID indicate the MAC CE.

A manner of indicating the MAC CE by the LCID is: The LCID includes K bits, h MAC CEs are indicated by k high-order bits of the LCID, and other MAC CEs are indicated by the K bits, where h, K, and k are all integers, k is less than K, and h is an integer greater than 0.

For example, assuming that k=2 and K=4, two MAC CEs, for example, MAC CEs that are most frequently used, may be indicated by two bits. For example, 11 indicates QueryRep signaling, and 01 indicates a contention resolution identity (UE Contention Resolution Identity). Other MAC CEs are indicated by four bits. For example, 00000 indicates a feedback (Feedback), 0001 indicates a flag unchange (Flag Unchange), 0010 indicates query signaling, 0011 indicates a random number, and 1000 indicates a paging control channel (paging control channel, PCCH) or a passive link paging control channel (passive link paging control channel, PLPCCH). The PLPCCH is a paging control channel for A-IoT or passive IoT (passive IoT). The PCCH and the PLPCCH are merely example names, and a name of the paging control channel is not specifically limited in this application. 1001 indicates a PLCCH (passive link control channel, passive link control channel) or a CCCH (common control channel). The PLCCH/CCCH is merely an example name, and a name of the channel is not specifically limited in this application. 1010 and 1011 are in reserved states, as shown in Table 1.

**Table 1**

| LCID | MAC CE |
|---|---|
| 11 | QueryRep signaling |
| 01 | UE contention resolution identity |
| 0000 | Feedback |
| 0001 | Flag unchange |
| 0010 | Query signaling |
| 0011 | Random number |
| 1000 | PCCH/PLPCCH |
| 1001 | PLCCH/CCCH |
| 1010 and 1011 | Reserved |

It should be understood that the foregoing correspondences between the LCID state and the MAC CE, the quantity of bits of the LCID, and the like are merely examples for description.

In the foregoing manner, the MAC CEs are indicated by variable-length fields of the LCID, so that a network device uses fewer bits to indicate a MAC CE that is used more frequently, and signaling overheads can be reduced. In addition, a signaling length is shortened, so that duration for a terminal device to read signaling is reduced. In this way, the inventory rate can be further increased.

It should be noted that, that the LCID indicates the MAC CE may alternatively be described as that the LCID indicates a service data unit (service data unit, SDU), or the LCID indicates a padding (padding) bit, and so on.

### Solution 2:

Currently, in wireless communications, a MAC header or a MAC CE needs to meet 8-bit alignment, that is, byte alignment. In other words, a length of each MAC header or each MAC CE needs to be an integer multiple of 8 bits. If a length of a valid field is not an integer multiple of 8 bits, a reserved bit is needed for padding to an integer multiple of 8 bits. However, the reserved bit causes some additional signaling length overheads, and an increased quantity of transmitted bits further affects the inventory rate.

One solution is that 8-bit alignment does not apply to the MAC header or the MAC CE, and the reserved bit is eliminated. In other words, the MAC header or the MAC CE is not constrained (or limited) by 8-bit alignment.

For example, a MAC header of QueryRep signaling includes an LCID field, a session (session) field, and a process (process) field. The LCID field may be two bits or four bits long. For example, as in Table 1, the LCID field may be two bits long, the session field may be one bit long, and the process field may be three bits long. Therefore, a bit length of the MAC header of the QueryRep signaling may be six bits. It can be learned that, in comparison with the MAC header under 8-bit alignment constraint, the MAC header of the QueryRep signaling in this solution is reduced by two bits.

For another example, when control information (control information, CI) is equal to 0, a MAC CE of QueryRep signaling includes a CI field. A length of the CI field is 1, and a bit length of the MAC CE of the QueryRep signaling may be 1. It can be learned that, in comparison with the MAC CE of the QueryRep signaling under the 8-bit alignment constraint, the MAC CE of the QueryRep signaling in this solution is reduced by six bits.

When the CI is equal to 1, the MAC CE of the QueryRep signaling includes a CI field, a pilot (pilot tone) field, a preamble field, a midamble (Midamble) field, a forward error correction (forward error correction, FEC) indication field, a repetition field, and an index field. The CI field includes one bit, the pilot field includes one bit, the preamble field includes two bits, the midamble field includes four bits, the FEC indication field includes one bit, and the repetition field includes two bits, the index field includes six bits. Therefore, the MAC CE of the QueryRep signaling may include 17 bits. It can be learned that, in comparison with the MAC CE of the QueryRep signaling under the 8-bit alignment constraint, the MAC CE of the QueryRep signaling in this solution is reduced by seven bits.

### Solution 3:

A quantity of bits of a random number may not be an integer multiple of 8. Optionally, the quantity of bits of the random number may be configured by a network device by using query signaling/QueryRep signaling. For example, if a quantity of terminal devices is relatively large, the quantity of bits of the random number is relatively large; or if the quantity of terminal devices is relatively small, the quantity of bits of the random number is relatively large.

### Solution 4:

A network device may send uplink scheduling information to a terminal device.

For example, the network device may include the uplink scheduling information in query signaling. Alternatively, the network device may include the uplink scheduling information in other downlink signaling.

In an implementation, the network device may include the uplink scheduling information in the query signaling, and the uplink scheduling information indicates a resource used by a first terminal device to send uplink data. Alternatively, the network device may update the uplink scheduling information by using other downlink signaling, for example, include new uplink scheduling information in other downlink signaling.

In a specific implementation, it is assumed that the query signaling carries uplink scheduling information 1, and other downlink signaling (assuming that the other downlink signaling is signaling 1) carries uplink scheduling information 2. Before receiving the signaling 1, the terminal device may perform uplink transmission by using or based on the uplink scheduling information 1. After receiving the signaling 1, the terminal device performs uplink transmission (which is also understood as one uplink transmission corresponding to/associated with/triggered by the signaling 1) after the signaling 1 by using or based on the uplink scheduling information 2, and performs other uplink transmission still using the uplink scheduling information 1.

In another specific implementation, it is assumed that the query signaling carries the uplink scheduling information 1, and the other downlink signaling carries the uplink scheduling information 2. The terminal device may perform uplink transmission by using the uplink scheduling information 1 before receiving the signaling 1, and after receiving the signaling 1, perform uplink transmission by using the uplink scheduling information 2.

In an example description, the uplink scheduling information may include at least one of the following: frequency-domain resource assignment information, a block (block) repetition quantity (or a bit repetition quantity/a data packet repetition quantity or the like), a start boundary of an uplink transmission frame (or a start position of the uplink transmission frame), or a preamble sequence length. For example, a block may be a data block for uplink transmission.

Optionally, the uplink scheduling information may further include a midamble (Midamble) configuration, an FEC indication, or a code rate (Code Rate) of channel coding.

The midamble configuration indicates a configuration of a midamble (midamble) of an uplink transmission sequence. For example, the midamble configuration may indicate a midamble sequence, for example, indicate four midamble sequences by two bits. Optionally, bit lengths of difference sequences may be different, for example, 8, 16, 32, and 64. The midamble configuration may also indicate an uplink transmission parameter or the like. The uplink transmission parameter is for determining a position of the midamble in the sequence.

The FEC indication indicates whether channel coding/forward error correction coding, for example, convolutional coding (convolutional coding) or polar coding (polar coding), is used for the uplink transmission. For example, whether the convolutional coding or the polar coding is used for uplink transmission may be indicated by one bit.

The code rate may indicate a code rate of channel coding used for the uplink transmission, for example, may be a code rate of the convolutional coding or the polar coding. For example, four code rate selections may be indicated by two bits: 00 indicates that the code rate is 1/8, 01 indicates 1/4, 10 indicates 1/2, and 11 indicates 1.

Optionally, indication of the code rate and the FEC indication may be jointly implemented. For example, if the code rate is 1, FEC is not used.

In addition, the uplink scheduling information may further indicate another parameter, for example, configuration parameters of a power level or a quantity of bit repetitions (chip repetitions/ bit repetitions), Manchester coding (Manchester coding), and a line code (PIE).

The foregoing information may be separately configured, or may be configured together, or a plurality of indications may be jointly configured by using one field. For example, one field/identifier/index may be associated with one piece of information, or may be associated with a plurality of pieces of information.

For example, a resource configured by using the uplink scheduling information in a scenario with poor coverage (or described as poor communication quality) and a resource configured by using the uplink scheduling information in a scenario with good coverage (or described as good communication quality) have at least one of the following differences:
A quantity of frequency-domain resources in the scenario with poor coverage is greater than a quantity of frequency-domain resources in the scenario with good coverage.
A quantity of block repetitions (or a quantity of bit repetitions/a quantity of data packet repetitions or the like) in the scenario with poor coverage is greater than a quantity of block repetitions (or a quantity of bit repetitions/a quantity of data packet repetitions or the like) in the scenario with good coverage.

A preamble sequence length in the scenario with poor coverage is greater than a preamble sequence length in the scenario with good coverage.

A code rate in the scenario with poor coverage is greater than a code rate in the scenario with poor coverage.

Good coverage (or described as good communication quality) may mean that signal strength is greater than a signal strength threshold, signal quality is greater than a signal strength threshold, signal power is greater than a signal power threshold, and so on. Similarly, poor coverage (or described as poor communication quality) may mean that the signal strength is less than the signal strength threshold, the signal quality is less than the signal strength threshold, the signal power is less than the signal power threshold, and so on. This is not specifically limited herein.

In the foregoing solution, an inventory resource may be flexibly configured by using the uplink scheduling information. This helps reduce resource fragmentation, reduce a transmission delay, and further helps improve coverage, so as to help increase the inventory rate.

### Solution 5:

A network device may send information 1 to a terminal device, where the information 1 indicate a cyclic redundancy check (cyclic redundancy check, CRC) rule.

The CRC rule is that if a quantity of bits of first uplink data is less than (or equal to) a threshold, CRC is not performed on the first uplink data; or if the quantity of bits of the first uplink data is greater than (or equal to) the threshold, the CRC is performed on the first uplink data.

Alternatively, the CRC rule is that if the quantity of bits of the first uplink data is less than (or equal to) the threshold, CRC of a first bit quantity is performed on the first uplink data; or if the quantity of bits of the first uplink data is greater than (or equal to) the threshold, CRC of a second bit quantity is performed on the first uplink data. The first bit quantity is less than the second bit quantity.

In Solution 1, a quantity of CRC bits is reduced or CRC check is not performed, so that duration needed for processing the uplink data by an access network device can be reduced, thereby further increasing the inventory rate.

### Solution 6:

A network device may send information 2 to a terminal device, where the information 2 indicates processing duration for uplink data. For example, the information 2 may indicate a range of the processing duration for the uplink data, or may indicate specific processing duration for the uplink data, or may indicate a maximum value and/or a minimum value of the processing duration for the uplink data, and so on.

That the information 2 indicates the processing duration for the uplink data may be described as that the information 2 indicates an uplink-to-downlink switching delay of the network device, the information 2 indicates duration of receiving the uplink data and sending feedback information of the uplink data by the network device, and so on.

For example, the processing duration for the uplink data may be first duration by default, and when communication quality is good, the processing duration for the uplink data indicated by using first signaling is second duration, where the second duration is less than the first duration.

For another example, the processing duration for the uplink data may be second duration by default, and when the communication quality is poor, the processing duration for the uplink data indicated by using first signaling is first duration, where the second duration is less than the first duration.

For still another example, when the communication quality is poor, that the processing duration for the uplink data is the first duration is indicated by using the first signaling. Alternatively, when the communication quality is good, that the processing duration for the uplink data is the second duration is indicated by using the first signaling.

For good communication quality and poor communication quality, refer to the related descriptions in Solution 3. Details are not described herein again.

According to Solution 4/Solution 5/Solution 6, in a possible implementation, the network device may send the uplink scheduling information/the information 1/the information 2 to all paged/selected terminal devices. For example, the network device may send the uplink scheduling information/the information 1/the information 2 by using multicast (or broadcast or groupcast) signaling such as a paging message/query signaling/QueryRep signaling.

In another possible implementation, the network device may send the uplink scheduling information/the information 1/the information 2 to a single terminal device. For example, the network device may send the uplink scheduling information/the information 1/the information 2 by using unicast signaling such as ACK signaling/feedback (feedback) signaling/a contention resolution identity/negative acknowledgment (NACK) signaling.

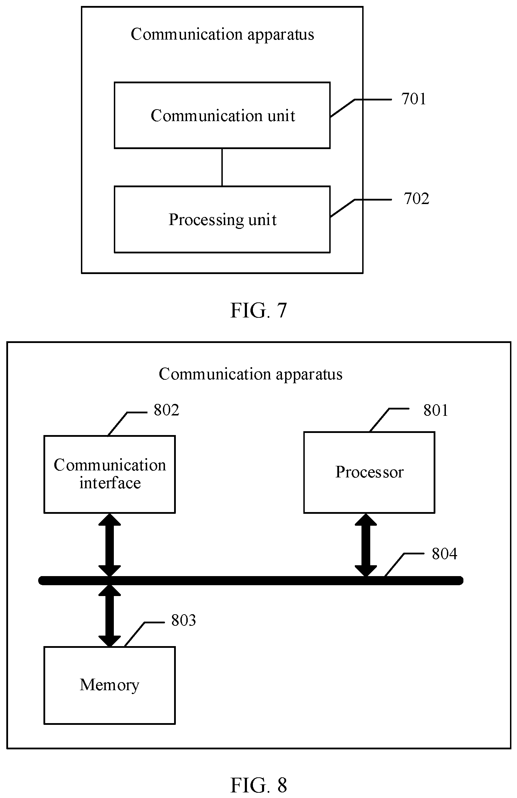

Based on a same inventive concept as the method embodiments, an embodiment of this application provides a communication apparatus. A structure of the communication apparatus may be shown in FIG. 7. The communication apparatus includes a communication unit 701 and a processing unit 702.

In an implementation, the communication apparatus may be specifically configured to implement the method performed by the terminal device in the embodiment in FIG. 4. The apparatus may be the terminal device, or a chip or a chip group in the terminal device, or a part of the chip that is configured to perform a related method function. The processing unit 702 is configured to: receive first signaling through the communication unit 701, where the first signaling carries a first process number, and the first signaling is for paging a terminal device, or the first signaling indicates a time/slot resource used for random access; send first uplink data in response to the first signaling through the communication unit 701; receive second signaling through the communication unit 701, where the second signaling carries a second process number, the second signaling is for paging a terminal device, or the second signaling indicates a time/slot resource used for random access, and the second process number is not equal to the first process number; and send second uplink data in response to the second signaling through the communication unit 701, where a time interval between the second signaling and the first signaling is less than processing time for the first uplink data.

Optionally, the processing unit 702 is further configured to start a timer, where the timer indicates a time period in which no response is made to third signaling carrying the first process number, and the third signaling is for paging a terminal device, or the third signaling indicates a time/slot resource used for random access.

Optionally, the processing unit 702 is further configured to: receive fourth signaling through the communication unit 701, where the fourth signaling indicates to reset or discard the first process number; and reset or discard the first process number.

In an implementation, the communication apparatus may be specifically configured to implement the method performed by the network device in the embodiment in FIG. 4. The apparatus may be the network device, or a chip or a chip group in the network device, or a part of the chip that is configured to perform a related method function. The processing unit 702 is configured to: send first signaling to a first terminal device through the communication unit 701, where the first signaling carries a first process number, the first signaling is for paging a terminal device, or the first signaling indicates a time/slot resource used for random access, and a first identifier identifies an inventory event; receive first uplink data from the first terminal device through the communication unit 701; send second signaling to the first terminal device through the communication unit 701, where the second signaling carries a second process number, the second signaling is for paging a terminal device, or the second signaling indicates a time/slot resource used for random access, and the second process number is not equal to the first process number; and receive second uplink data from the first terminal device through the communication unit 701, where a time interval between the second signaling and the first signaling is less than processing time for the first uplink data.

Optionally, the processing unit 702 is further configured to send fourth signaling through the communication unit 701, where the fourth signaling indicates to reset or discard the first process number.

Division into the modules in embodiments of this application is an example, is merely division into logical functions, and may be other division in actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in this embodiment of this application, further refer to related descriptions in the method embodiments.

In a possible manner, the communication apparatus may be shown in FIG. 8. The apparatus may be a communication device or a chip in the communication device. The communication device may be the terminal device in the foregoing embodiments or the network device in the foregoing embodiments. The apparatus includes a processor 801 and a communication interface 802, and may further include a memory 803. The processing unit 702 may be the processor 801. The communication unit 701 may be the communication interface 802. Optionally, the processor 801 and the memory 803 may alternatively be integrated together.

The processor 801 may be a CPU, a digital processing unit, or the like. The communication interface 802 may be a transceiver, an interface circuit like a transceiver circuit, a transceiver chip, or the like. The apparatus further includes the memory 803, configured to store a program executed by the processor 801. The memory 803 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory 803 is any other medium that can be configured to carry or store expected program code in a form of instructions or a data structure and that can be accessed by a computer, but is not limited thereto.

The processor 801 is configured to execute the program code stored in the memory 803, and is specifically configured to perform an action of the processing unit 702. Details are not described herein again in this application. The communication interface 802 is specifically configured to perform an action of the communication unit 701. Details are not described herein again in this application.

A specific connection medium between the communication interface 802, the processor 801, and the memory 803 is not limited in embodiments of this application. In embodiments of this application, the memory 803, the processor 801, and the communication interface 802 are connected through a bus 804 in FIG. 8. The bus is represented by using a bold line in FIG. 8. A connection manner between other components is merely an example for description, and is not limited thereto. The bus may include an address bus, a data bus, a control bus, and the like. For ease of representation, only one bold line is used for representing the bus in FIG. 8, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system. The communication system includes a communication apparatus configured to implement a function of the terminal device in the embodiment in FIG. 4 and a communication apparatus configured to implement a function of the network device in the embodiment in FIG. 4.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of protection defined by the claims in this application and equivalent technologies thereof.

## Claims

1. A communication method, wherein the method comprises:
receiving first signaling, wherein the first signaling carries a first process number, and the first signaling is for paging a terminal device, or the first signaling indicates a time/slot resource used for random access;
sending first uplink data in response to the first signaling;
receiving second signaling, wherein the second signaling carries a second process number, the second signaling is for paging a terminal device, or the second signaling indicates a time/slot resource used for random access, and the second process number is not equal to the first process number; and
sending second uplink data in response to the second signaling, wherein
a time interval between the second signaling and the first signaling is less than processing time for the first uplink data.

2. The method according to claim 1, wherein the first signaling further indicates to skip random access.

3. The method according to claim 2, wherein that the first signaling further indicates to skip the random access comprises:
the first signaling indicates not to send a random number used for random access, or the first signaling indicates not to monitor third signaling, wherein the third signaling indicates a time/slot resource used for random access.

4. The method according to claim 2 or 3, wherein if the first signaling indicates the time/slot resource used for random access, that the first signaling indicates to skip the random access comprises:
the first signaling carries a parameter Q, wherein a value of the parameter Q is 0, and the parameter Q indicates a quantity of random access slots comprised in one slot.

5. The method according to any one of claims 1 to 4, wherein the method further comprises:
starting a timer, wherein the timer indicates a time period in which no response is made to the third signaling carrying the first process number, and the third signaling is for paging a terminal device, or the third signaling indicates the time/slot resource used for random access.

6. The method according to claim 5, wherein the first signaling further indicates duration of the timer.

7. The method according to any one of claims 1 to 6, wherein the method further comprises:
receiving fourth signaling, wherein the fourth signaling indicates to reset or discard the first process number; and
resetting or discarding the first process number.

8. The method according to any one of claims 1 to 7, wherein the first signaling further indicates a cyclic redundancy check CRC rule, and the CRC rule is that CRC is not performed on the first uplink data if a quantity of bits of the first uplink data is less than a threshold.

9. The method according to any one of claims 1 to 8, wherein the first signaling further indicates processing duration for the first uplink data.

10. A communication method, wherein the method is applicable to a network device, and the method comprises:
sending first signaling to a first terminal device, wherein the first signaling carries a first process number, the first signaling is for paging a terminal device, or the first signaling indicates a time/slot resource used for random access, and the first identifier identifies an inventory event;
receiving first uplink data from the first terminal device;
sending second signaling to the first terminal device, wherein the second signaling carries a second process number, the second signaling is for paging a terminal device, or the second signaling indicates a time/slot resource used for random access, and the second process number is not equal to the first process number; and
receiving second uplink data from the first terminal device, wherein
a time interval between the second signaling and the first signaling is less than processing time for the first uplink data.

11. The method according to claim 10, wherein the first signaling further indicates to skip random access.

12. The method according to claim 11, wherein that the first signaling further indicates to skip the random access comprises:
the first signaling indicates not to send a random number used for random access, or the first signaling indicates not to monitor third signaling, wherein the third signaling indicates a time/slot resource used for random access.

13. The method according to claim 11 or 12, wherein if the first signaling indicates the time/slot resource used for random access, that the first signaling indicates to skip the random access comprises:
the first signaling carries a parameter Q, wherein a value of the parameter Q is 0, and the parameter Q indicates a quantity of random access slots comprised in one slot.

14. The method according to any one of claims 10 to 13, wherein the first signaling further indicates duration of a timer, the timer indicates a time period in which a terminal device does not respond to the third signaling carrying the first process number, and the third signaling is for paging a terminal device, or the third signaling indicates the time/slot resource used for random access.

15. The method according to any one of claims 10 to 14, wherein the method further comprises:
sending fourth signaling, wherein the fourth signaling indicates to reset or discard the first process number.

16. The method according to any one of claims 10 to 15, wherein the first signaling further indicates a cyclic redundancy check CRC rule, and the CRC rule is that CRC is not performed on the first uplink data if a quantity of bits of the first uplink data is less than a threshold.

17. The method according to any one of claims 10 to 16, wherein the first signaling further indicates processing duration for the first uplink data.

18. A communication apparatus, comprising a unit or module configured to perform the method according to any one of claims 1 to 9, or comprising a unit or module configured to perform the method according to any one of claims 10 to 17.

19. A communication apparatus, comprising a processor and a memory, wherein the memory is configured to store program instructions, and when the processor executes the program instructions, the method according to any one of claims 1 to 9 is performed, or the method according to any one of claims 10 to 17 is performed.

20. A computer-readable storage medium, wherein the computer-readable storage medium stores computer-readable instructions, and when the computer-readable instructions are run on a communication apparatus, the method according to any one of claims 1 to 9 is performed, or the method according to any one of claims 10 to 17 is performed.

21. A computer program product, wherein when the computer program product runs on a device, the device is caused to perform the method according to any one of claims 1 to 9 or the method according to any one of claims 10 to 17.
